# EUROPEAN PATENT APPLICATION

(11) **EP 4 722 944 A2**
(43) Date of publication of application: **08.04.2026**
(21) Application number: 25165610.4
(22) Date of filing: 24.03.2025
(51) Int. Cl.: G06F 16/3329

(54) **LARGE LANGUAGE MODEL SYSTEM, METHOD FOR OPERATING A LARGE LANGUAGE MODEL SYSTEM AND METHOD FOR APPLYING A LARGE LANGUAGE MODEL SYSTEM**

(30) Priority: 01.10.2024 TW 113137646
(71) Applicant: Wistron Corporation, New Taipei City 22181 (TW)
(72) Inventor: CHEN, Chih Ming, New Taipei City 22181 (TW)
(74) Representative: Viering, Jentschura & Partner mbB Patent- und Rechtsanwälte

(57) **Abstract**

A large language model (LLM) system includes a personal AI agent (102), an enterprise AI agent (202), and a public AI agent (302). A method for operating the LLM includes: executing a first action plan to obtain a first integrated answer (112) and a first integrated score (114) based on a first query (110) using the personal AI agent; and executing a second action plan to obtain a second integrated answer (122) and a second integrated score (124) based on a second query (120) using the enterprise AI agent (202). A method for applying the LLM system includes: transforming a bitmap of a block diagram into a scalable vector graphics and integrating a semantic tag into the scalable vector graphics; training the large language model by using the scalable vector graphics integrated with the semantic tag and using a functional specification document; and generating a structured text description of the block diagram using the large language model which is trained.

## Description

### BACKGROUND

### Technical Field

The instant disclosure relates to the field of artificial intelligence, and particularly to the technologies concerning a large language model system, a method for operating large language model systems, and a method for applying large language model systems.

### Related Art

A large language model (LLM), such as GPT-3 or GPT-4, is an artificial intelligence (AI) trained on vast amounts of data and can generate responses based on input data. However, the large language model does not have the ability to verify the truthfulness or accuracy of the generated information. The large language model generates responses based on patterns, correlations, and probabilities learned from the training data. Notwithstanding that the large language model often provides helpful and informative responses, the large language model can also generate inaccurate or misleading responses, which may happen due to biases in the training data, a lack of context or real-time information, or simply because the large language model is not capable of genuine understanding or critical thinking.

Traditionally, to obtain an answer to a query that involves multiple domains, the user usually needs to query multiple large language models of different domains by following these steps: First, a query is submitted to the first large language model to get response 1. Incorporate response 1 into the context of the prompt, then the same query is submitted to the second large language model to get response 2. Similarly, incorporate response 2 into the context of the prompt, then the same query is submitted to the third large language model to get response 3. Through the responses from multiple large language models of different domains, valuable insights can be gained from the large language models of each domain to refine the answers accordingly. However, if the user uses multiple large language models to assist in generating content that involves multiple domains, the critical facts in the generated content should be verified to ensure that the responses are unbiased.

### SUMMARY

In view of this, one of some embodiments of the instant disclosure provide a large language model system, a method for operating a large language model system, and a method for applying a large language model system to overcome technical problems known to the inventor. Instead of solely relying on the large language models to generate content, the following method is adopted to ensure that critical facts in the generated content are correct without requiring extensive manual effort to verify the generated content. The large language model system can obtain and integrate data from various channels, and the method comprises: storing factual data in vector databases for querying, generating enriched information from factual data using the large language models, and providing supplementary responses using a larger artificial intelligence agent. The integrator in the AI agent is responsible for integrating the factual data from the vector database, the reasoning results based on the factual data, the enriched information from the large language models, and the complementary responses from the larger AI agent.

According to one or some embodiments of the instant disclosure, a large language model system comprising a personal AI computer and an enterprise AI server is provided. The personal AI computer executes a personal AI agent, and the personal AI agent executes a first action plan to obtain a first integrated answer and a first integrated score based on a first query. In response to that the first integrated score is less than a threshold, the personal AI agent submits a second query to the enterprise AI agent. The enterprise AI server comprises an enterprise AI agent, and the enterprise AI agent executes a second action plan to obtain a second integrated answer and a second integrated score based on the second query. In response to that the second integrated score is greater than or equal to the threshold, the enterprise AI agent returns the second integrated answer to the personal AI agent.

According to one or some embodiments of the instant disclosure, a method for operating a large language model system is provided, and the method comprises: executing a first action plan to obtain a first integrated answer and a first integrated score based on a first query using a personal AI agent, and in response to that the first integrated score is less than a threshold, the personal AI agent submits a second query to an enterprise AI agent; and executing a second action plan to obtain a second integrated answer and a second integrated score based on the second query using the enterprise AI agent, and in response to that the second integrated score is greater than or equal to the threshold, the enterprise AI agent returns the second integrated answer to the personal AI agent.

According to one or some embodiments of the instant disclosure, a method for applying a large language model system is provided, and the method comprises: transforming a bitmap of a block diagram into a scalable vector graphics and integrating a semantic tag into the scalable vector graphics; training the large language model using the scalable vector graphics integrated with the semantic tag and using a functional specification document; and generating a structured text description of the block diagram using the large language model which is trained.

### BRIEF DESCRIPTION OF THE DRAWINGS

The instant disclosure will become more fully understood from the detailed description given herein below for illustration only, and thus not limitative of the instant disclosure, wherein:
FIG. 1 is a block diagram illustrating a large language model system according to an embodiment of the instant disclosure.
FIG. 2 is a schematic diagram illustrating the information integration using the AI agent according to an embodiment of the instant disclosure.
FIG. 3 is a flowchart illustrating the execution of an action plan using the AI agent according to an embodiment of the instant disclosure.
FIG. 4 is a flowchart illustrating a method for operating a large language model system according to an embodiment of the instant disclosure.
FIG. 5 is a flowchart illustrating a method for operating a large language model system according to an embodiment of the instant disclosure.
FIG. 6 is a flowchart illustrating a method for operating a large language model system according to an embodiment of the instant disclosure.
FIG. 7 is a flowchart illustrating a method for operating a large language model system according to an embodiment of the instant disclosure.
FIG. 8 is a flowchart illustrating a method for operating a large language model system according to an embodiment of the instant disclosure.
FIG. 9 is a flowchart illustrating a method for applying a large language model system according to an embodiment of this invention.
FIG. 10 is a flowchart illustrating text extraction of the method for applying a large language model system according to an embodiment of the instant disclosure.
FIG. 11 is a flowchart illustrating the data extraction process executed using the AI agent according to a method for applying a large language model system according to an embodiment of the instant disclosure.

### DETAILED DESCRIPTION

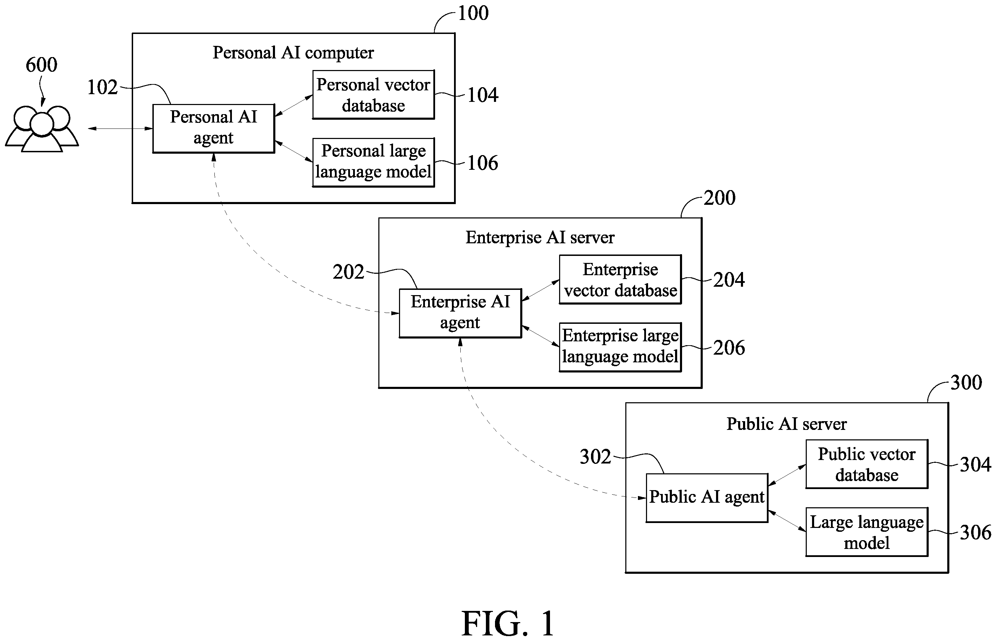

FIG. 1 is a block diagram illustrating a large language model system according to an embodiment of the instant disclosure. Please refer to FIG. 1, the embodiment shown in FIG. 1 comprises three types of computers. The first type is a personal AI computer 100, which comprises a personal AI agent 102, a personal vector database 104, and a personal large language model 106. For instance, the personal AI computer 100 is an employee's personal computer. The second type is an enterprise AI server 200, which comprises an enterprise AI agent 202, an enterprise vector database 204, and an enterprise large language model 206. For instance, the enterprise AI server 200 is an enterprise server on a private cloud. The third type is a public AI server 300, which comprises a public AI agent 302, a public vector database 304, and a public large language model 306. For instance, the public AI server 300 is a server running on a public cloud service provider.

The large language model system according to one or some embodiments of the instant disclosure is a multi-layered structure, which can coordinate the large language models of different domains or scales. The large language model system has the advantages for meeting different processing power requirements and training data volume requirements, including:
1. Scalability: The appropriate large language model can be selected based on the complexity of the query. A simple query can use the personal large language model 106 on the personal AI computer 100, which consumes fewer resources. A more complex query can use the more powerful enterprise large language model 206 on the enterprise AI server 200. The most complex query can use the most powerful public large language model 306 on the public AI server 300. The "complexity" here refers to the domains involved in the query.
2. Efficiency: The simpler tasks can be independently processed using the reasoning engine in the AI agents (102, 202, or 302) to potentially avoid unnecessary large language model calls.
3. Flexibility: The information gathering strategies of the AI agents (102, 202, or 302) can be adapted using the action plan based on the responses from the initial large language model.

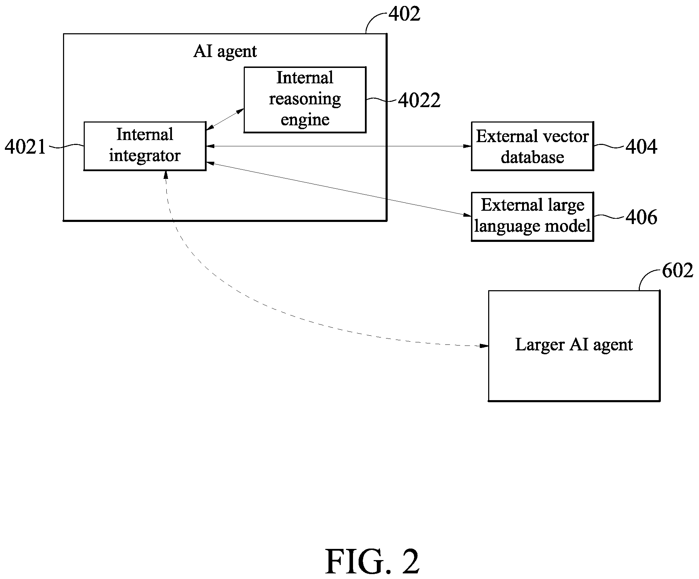

FIG. 2 is a schematic diagram illustrating the information integration using the AI agent according to an embodiment of the instant disclosure. Please refer to FIG. 2, the embodiment of AI agent 402 shown in FIG. 2 comprises an internal integrator 4021 and an internal reasoning engine 4022. The internal integrator 4021 is connected to the internal reasoning engine 4022, an external vector database 404, an external large language model 406, and a larger AI agent 602. The internal integrator 4021 is responsible for integrating data from the internal reasoning engine 4022, the external vector database 404, the external large language model 406, and the larger AI agent 602. The larger AI agent 602 (for instance, the enterprise AI agent 202 and the public AI agent 302) has the ability to process queries of higher complexity than the AI agent 402 (for instance, the personal AI agent 102). Therefore, the larger AI agent 602 can obtain answers to queries that the AI agent 402 cannot process and return the answers of the larger AI agent 602 as supplementary responses to the AI agent 402. The internal inference engine 4022, such as Hermit, reasons factual data to obtain reasoning results from the external vector database 404. The architecture of the AI agent 402 illustrated in FIG. 2 is also applicable to the personal AI agent 102, the enterprise AI agent 202, and the public AI agent 302.

The tasks performed by the internal integrator 4021 of the AI agent 402 include:
1. Data preprocessing: The vector data from the external vector database 404 is converted into a format suitable for integration. In one embodiment, the vector data can be converted into a common vector representation or the values of the vector data can be normalized.
2. Enriched information extraction: The relevant enriched information from text data is extracted using the external large language model 406 which is pre-trained. In one embodiment, the enriched information extraction task can be achieved by applying natural language processing techniques.
3. Data fusion: The factual data, the reasoning results, and the enriched information is combined using appropriate fusion techniques. In one embodiment, the data fusion task can be achieved using weighted averaging or advanced algorithms, such as a Recurrent Neural Network (RNN) or a Transformer.
4. Complementary response generation: The auxiliary response is generated using the integrated data. In one embodiment, the complementary response generation task can be achieved using natural language generation techniques, such as template-based generation, rule-based systems, or deep learning methods like sequence-to-sequence models.

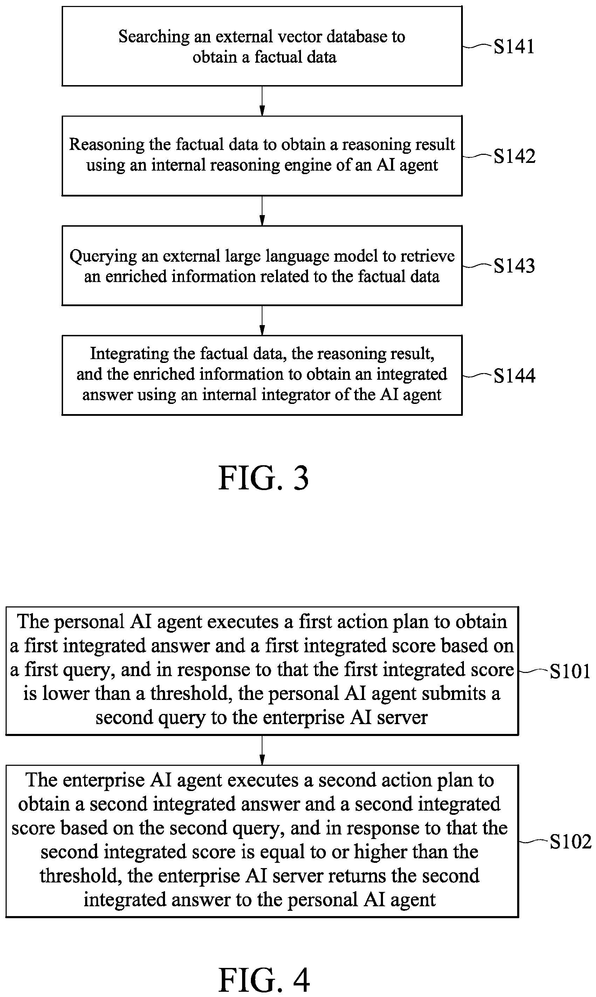

FIG. 3 is a flowchart illustrating the execution of an action plan using the AI agent according to an embodiment of the instant disclosure. Please refer to both FIG. 2 and FIG. 3. In the embodiment shown in FIG. 3, the generated action plan is a plan created or generated by the external large language model 406 to achieve a specific goal or outcome. The action plan is a series of instructions, steps, tasks, or operations and is generated by the external large language model 406 based on understandings of the external large language model 406 for the queries or circumstances. The generated action plan may involve various tasks and subtasks that need to be executed in a specific order. The action plan comprises executing the steps S141 to S144. In the step S141, searching an external vector database 404 to obtain a factual data. In the step S142, reasoning the factual data to obtain a reasoning result using an internal reasoning engine 4022 of an AI agent 402. In the step S143, querying an external large language model 406 to retrieve an enriched information related to the factual data. In the step S144, integrating the factual data, the reasoning result, and the enriched information to obtain an integrated answer using an internal integrator 4021 of the AI agent 402.

The term "enriched information" refers to additional or supplementary information that enhances the understanding, relevance, or value of specific content or data. The enriched information provides additional details, explanations, or illustrations to enrich and deepen the overall understanding and value of the content. The enriched information may comprise various elements, such as: 1. Background or historical context, 2. Definitions or explanations, 3. Examples or illustrations, 4. Relevant references or sources, 5. Statistical or quantitative data, 6. Related facts or figures, 7. Expert opinions or citations, 8. Visual aids or graphics, 9. Historical events or anecdotes, 10. Real-life examples or case studies.

FIG. 4 is a flowchart illustrating a method for operating a large language model system according to an embodiment of the instant disclosure. Please refer to FIG. 4. In the embodiment shown in FIG. 4, the method for operating the large language model system comprises executing the steps S101 and S102. In the step S101, the personal AI agent 102 executes a first action plan to obtain a first integrated answer 112 and a first integrated score 114 based on the first query 110, and in response to that the first integrated score 114 is less than a threshold, the personal AI agent 102 submits a second query 120 to the enterprise AI agent 202. In the step S102, the enterprise AI agent 202 executes a second action plan to obtain a second integrated answer 122 and a second integrated score 124 based on the second query 120, and in response to that the second integrated score 124 is greater than or equal to the threshold, the enterprise AI agent 202 returns the second integrated answer 122 to the personal AI agent 102.

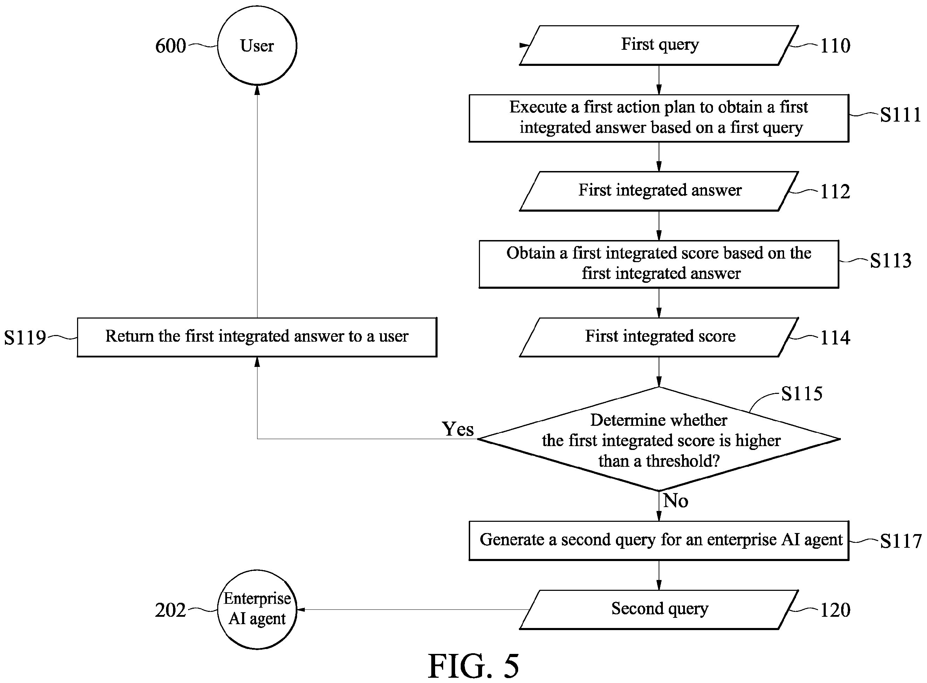

FIG. 5 is a flowchart illustrating a method for operating a large language model system according to an embodiment of the instant disclosure. Please refer to FIG. 1, FIG. 4, and FIG. 5. In the embodiment shown in FIG. 5, the step S101 of the method for operating the large language model system further comprises executing the steps S111, S113, S115, S117, and S119 using the personal AI agent 102. The first query 110 submitted by a user 600 is received by an executing program of the personal AI agent 102 in the personal AI computer 100. In the step S111, executing a first action plan to obtain a first integrated answer 112 based on a first query 110. In one embodiment, the personal AI agent 102 requests the personal large language model 106 to return the first action plan to obtain the first integrated answer 112, and the personal large language model 106 returns the first action plan to the personal AI agent 102. Subsequently, the personal AI agent 102 executes each instruction of the first action plan step-by-step, comprising: searching a personal vector database 104 to obtain a first factual data; reasoning the first factual data to obtain a first reasoning result using a reasoning engine of the personal AI agent 102; querying a personal large language model 106 to retrieve a first enriched information related to the first factual data; and integrating the first factual data, the first reasoning result, and the first enriched information to obtain the first integrated answer 112 using an integrator of the personal AI agent 102.

In the step S113, obtaining a first integrated score 114 based on scoring the first integrated answer 112. In one embodiment, the personal AI agent 102 scores the first integrated answer 112 to obtain the first integrated score 114 based on various types of information contained in the first integrated score 114.

In the step S115, determine whether the first integrated score 114 is greater than a threshold. In one embodiment, for example, the threshold is set to 60 points. In response to the personal AI agent 102 determining that the first integrated score 114 is less than the threshold, the step S117 is executed. In response to the personal AI agent 102 determining that the first integrated score 114 is greater than or equal to the threshold, the step S119 is executed.

In the step S117, generating a second query 120 for an enterprise AI agent 202. In one embodiment, the second query 120 generated by the personal AI agent 102 comprises the first integrated answer 112.

In the step S119, returning the first integrated answer 112 to the user 600. In one embodiment, in response to the personal AI agent 102 determining that the first integrated score 114 is greater than or equal to the threshold, the personal AI agent 102 returns the first integrated answer 112 to the user 600, indicating that the first integrated answer 112 already meets the standard.

In one embodiment, the personal AI agent 102 receives the second integrated answer 122 returned from the enterprise AI agent 202, integrates the first integrated answer 112 with the second integrated answer 122 to form a first response answer, and scores the first response answer to obtain a first response score. In response to that the first response score is less than the threshold, the personal AI agent 102 returns a null value (N/A) to the user 600. In response to that the first response score is greater than or equal to the threshold, the personal AI agent 102 returns the first response answer to the user 600.

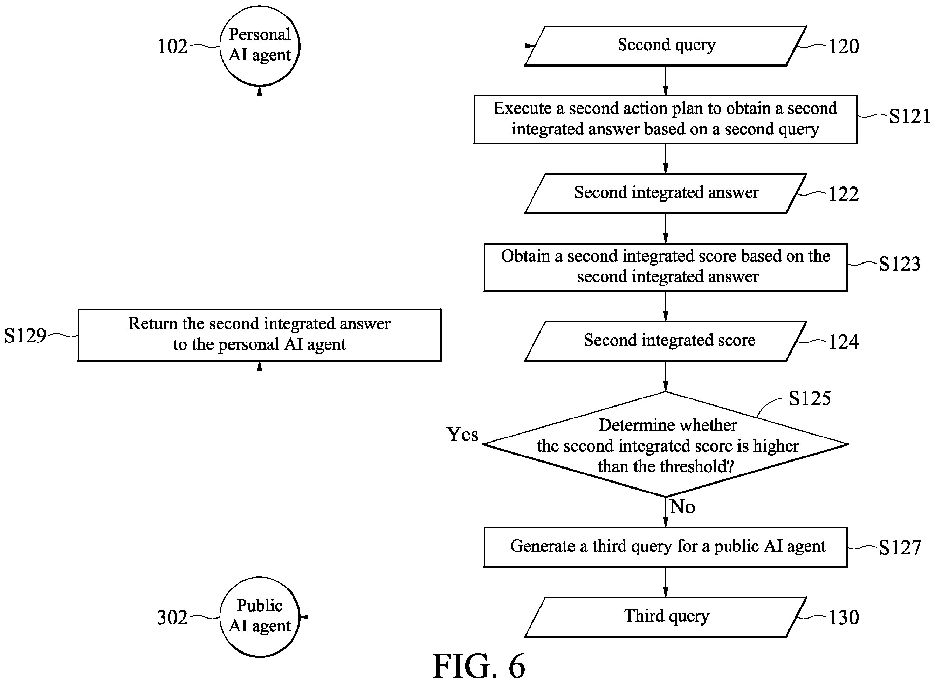

FIG. 6 is a flowchart illustrating a method for operating a large language model system according to an embodiment of the instant disclosure. Please refer to FIG. 1, FIG. 4, and FIG. 6. In the embodiment shown in FIG. 6, the step S102 of the method for operating the large language model system further comprises executing the steps S121, S123, S125, S127, and S129 using the enterprise AI agent 202. The second query 120 submitted by the personal AI agent 102 is received by an executing program of the enterprise AI agent 202 in the enterprise AI server 200. In the step S121, executing a second action plan to obtain a second integrated answer 122 based on a second query 120. In one embodiment, the enterprise AI agent 202 requests the enterprise large language model 206 to return the second action plan to obtain the second integrated answer 122, and the enterprise large language model 206 returns the second action plan to the enterprise AI agent 202. Subsequently, the enterprise AI agent 202 executes each instruction of the second action plan step-by-step, comprising: searching an enterprise vector database 204 to obtain a second factual data; reasoning the second factual data to obtain a second reasoning result using a reasoning engine of the enterprise AI agent 202; querying an enterprise large language model 206 to retrieve a second enriched information related to the second factual data; and integrating the second factual data, the second reasoning result, and the second enriched information to obtain the second integrated answer 122 using an integrator of the enterprise AI agent 202.

In the step S123, obtaining a second integrated score 124 based on scoring the second integrated answer 122. In one embodiment, the enterprise AI agent 202 scores the second integrated answer 122 to obtain the second integrated score 124 based on various types of information contained in the second integrated score 124.

In the step S125, determining whether the second integrated score 124 is greater than the threshold. In one embodiment, for example, the threshold is set to 60 points. In response to the enterprise AI agent 202 determining that the second integrated score 124 is less than the threshold, the step S127 is executed. In response to the enterprise AI agent 202 determining that the second integrated score 124 is greater than or equal to the threshold, the step S129 is executed.

In the step S127, generating a third query 130 for the enterprise AI agent 302. In one embodiment, the third query 130 generated by the enterprise AI agent 202 contains the first integrated answer 112 and the second integrated answer 122.

In the step S129, returning the second integrated answer 122 to the personal AI agent 102. In one embodiment, in response to the enterprise AI agent 202 determining that the second integrated score 124 is greater than or equal to the threshold, the enterprise AI agent 202 returns the second integrated answer 122 to the personal AI agent 102, indicating that the second integrated answer 122 already meets the standard.

In one embodiment, the enterprise AI agent 202 receives the third integrated answer 132 from the public AI agent 302, integrates the third integrated answer 132 with the second integrated answer 122 to form a second response answer, and scores the second response answer to obtain the second response score. In response to that the second response score is less than the threshold, the enterprise AI agent 202 returns a null value (N/A) to the personal AI agent 102. In response to that the second response score is greater than or equal to the threshold, the enterprise AI agent 202 returns the second response answer to the personal AI agent 102.

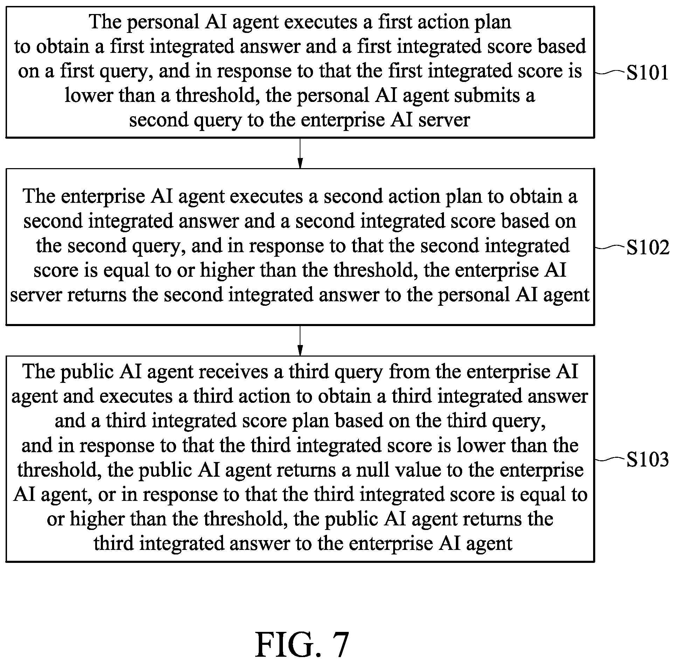

FIG. 7 is a flowchart illustrating a method for operating a large language model system according to an embodiment of the instant disclosure. Please refer to both FIG. 4 and FIG. 7. In the embodiment shown in FIG. 7, the method for operating the large language model system comprises executing the steps S101 to S103. The steps S101 and S102 have been described in the previously mentioned embodiment shown in FIG. 4, and will not be repeated here. In the step S103, the public AI agent 302 receives a third query 130 from the enterprise AI agent 202 and executes a third action plan to obtain a third integrated answer 132 and a third integrated score 134 based on the third query 130. In response to that the third integrated score 134 is less than the threshold, the public AI agent 302 returns a null value 138 to the enterprise AI agent 202, or in response to that the third integrated score 134 is greater than or equal to the threshold, the public AI agent 302 returns the third integrated answer 132 to the enterprise AI agent 202.

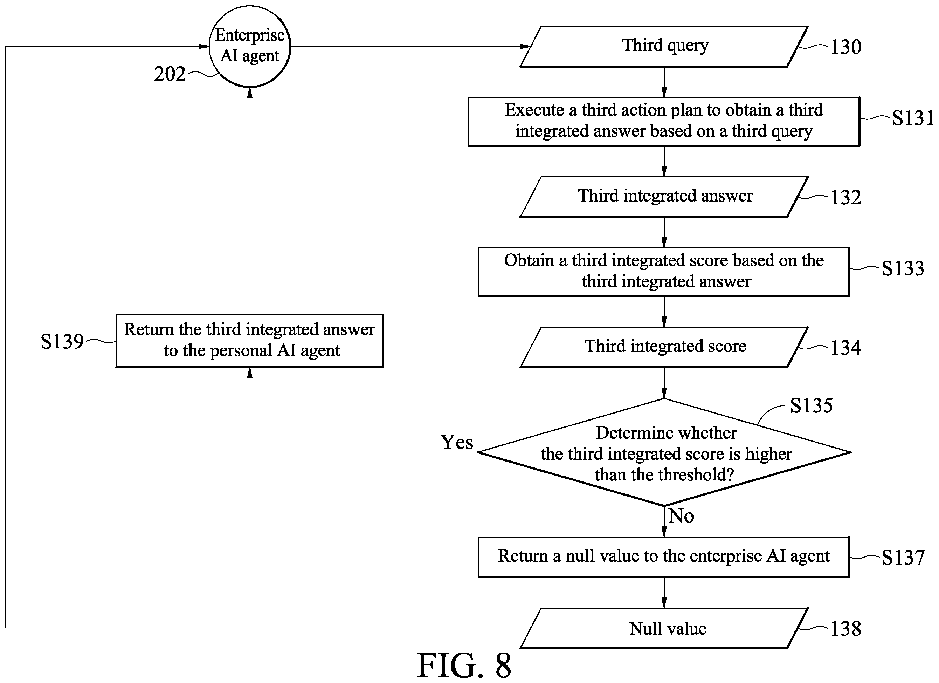

FIG. 8 is a flowchart illustrating a method for operating a large language model system according to an embodiment of the instant disclosure. Please refer to FIG. 1, FIG. 7, and FIG. 8. In the embodiment shown in FIG. 8, the step S103 of the method for operating the large language model system further comprises executing the steps S131, S133, S135, S137, and S139 using the public AI agent 302. The second query 130 submitted by the enterprise AI agent 202 is received by an executing program of the public AI agent 302 in the public AI server 300. In the step S131, executing a third action plan to obtain a third integrated answer 132 based on a third query 130. In one embodiment, the public AI agent 302 requests the public large language model 306 to return the third action plan to obtain the third integrated answer 132, and the public large language model 306 returns the third action plan to the public AI agent 302. Subsequently, the public AI agent 302 executes each instruction of the third action plan step-by-step, comprising: searching the public vector database 304 to obtain a third factual data; reasoning the third factual data to obtain a third reasoning result using a reasoning engine of the public AI agent 302; querying a public large language model 306 to obtain a third enriched information related to the third factual data; and integrating the third factual data, the third reasoning result, and the third enriched information to obtain the third integrated answer 132 using the integrator of the public AI agent 302.

In the step S133, obtaining a third integrated score 134 based on scoring the third integrated answer 132. In one embodiment, the public AI agent 302 scores the third integrated answer 132 to obtain the third integrated score 134 based on various types of information contained in the third integrated score 134.

In the step S135, determining whether the third integrated score 134 is greater than the threshold. In one embodiment, for example, the threshold is set to 60 points. In response to the public AI agent 302 determining that the third integrated score 134 is less than the threshold, the step S137 is executed. In response to the public AI agent 302 determining that the third integrated score 134 is greater than or equal to the threshold, the step S139 is executed.

In the step S137, returning a null value 138 to the enterprise AI agent 202. In one embodiment, in response to the public AI agent 302 determining that the third integrated score 134 is less than the threshold, the public AI agent 302 returns a null value to the enterprise AI agent 202, indicating that the public AI agent 302 could not generate an answer that meets the standard.

In the step S139, return the third integrated score 134 to the enterprise AI agent 202. In one embodiment, in response to the public AI agent 302 determining that the third integrated score 134 is greater than or equal to the threshold, the public AI agent 302 returns the third integrated answer 132 to the enterprise AI agent 202, indicating that the third integrated answer 132 already meets the standard.

In one embodiment, in response to that the personal AI agent 102 submits a second query 120 to the enterprise AI agent 202, the first integrated answer 112 from the personal AI agent 102 can be incorporated into the second query 120 as context. Such configuration helps the enterprise AI agent 202 understand the background of the query more broadly, thereby allowing the enterprise AI agent 202 to focus on domains that the personal AI agent 102 cannot handle and to provide a more comprehensive and accurate response. In another embodiment, in response to that the enterprise AI agent 202 submits the third query 130 to the public AI agent 302, the first integrated answer 112 and the second integrated answer 122 obtained by the personal AI agent 102 and the enterprise AI agent 202, respectively, will be integrated into the third query 130 as context. Such configuration helps the public AI agent 302 understand the background of query more broadly, thereby allowing the public AI agent 302 to focus on domains that the personal AI agent 102 and enterprise AI agent 202 cannot handle and provide a more comprehensive and accurate response. Through this configuration time and resources can be saved and the need to reinterpret information that has already been covered can be avoided.

In one embodiment, the personal AI agent 102, the enterprise AI agent 202, and the public AI agent 302 can respectively score the first integrated answer 112, the second integrated answer 122, and the third integrated answer 132 that are obtained by the AI agents. For example, the AI agents can assign weights or confidence scores to each type of information content (factual information, enriched information, supplementary responses) based on reliability, relevance, or importance of the information content. The weights can be determined through various techniques, such as:
1. Rule-based Scoring: The rules or heuristics that assign scores is defined based on predetermined criteria. For instance, assign a higher score to factual information from reliable sources or give higher weight to enriched information that matches a user's query.
2. Machine Learning-based Scoring: The machine learning model is trained using training data with tags to predict the relevance or accuracy of each type of information. The models can be trained using features such as data source reliability, linguistic patterns, or contextual similarity.
3. Hybrid Methods: The multiple scoring techniques or models to is combined to obtain a more robust and accurate score. The hybrid methods can involve averaging or weighting scores from different models or algorithms.
4. Feedback-based Scoring: The user feedback is incorporated to continuously update and refine the scores. For instance, if users consistently find certain information helpful or relevant, the scores related to the user feedback can be adjusted accordingly.

The use of large language models can assist users (such as engineers) in quickly creating prototypes, creating design concepts, and researching various design possibilities to generate new product proposals. Hardware requirements are typically depicted in functional specification documents. All block diagrams are drawn in bitmap format. Engineers should ensure that all block diagrams in the product proposals can be interconnected to each other at interface level. For this purpose, engineers should gather small block diagrams from numerous PDF files and attempt to assemble the small block diagrams into a larger block diagram or system diagram to complete the new product proposal. Automating these tasks using the large language models (such as Llama 2 of Meta) can possibly solve the involved workload and costs. However, the large language models primarily excel at natural language processing rather than visual understanding. In order to accurately generate diagrams, the text from text-containing regions in the block diagrams has to be obtained to understand the relationships and interactions between components described in the text. In this embodiment, all available bitmaps of block diagrams are transformed into the scalable vector graphics (SVG). The semantic tags are used to tag the objects in the scalable vector graphics. The large language model is trained and performs reasoning using the scalable vector graphics with the semantic tags added. In this case, the large language model which is trained can generate the block diagrams that are interconnected to each other at the interface level based on the functional specification document.

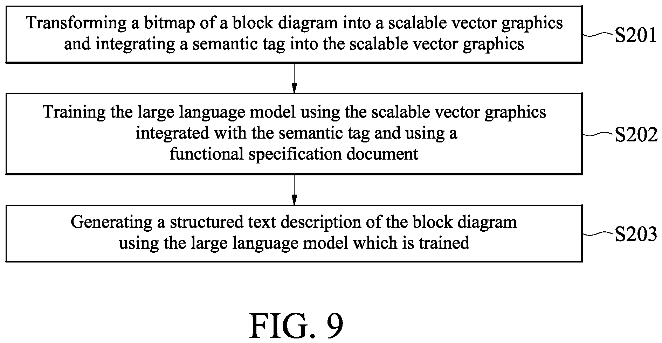

FIG. 9 is a flowchart illustrating a method for applying a large language model system according to an embodiment of this invention. Please refer to FIG. 9. In the embodiment shown in FIG. 9, the method for applying the large language model system can be executed on a personal AI computer 100, an enterprise AI server 200, and/or a public AI server 300. The method for applying the large language model system comprises: transforming a bitmap of a block diagram into a scalable vector graphics and integrating a semantic tag into the scalable vector graphics (step S201); training a large language model using the scalable vector graphics integrated with the semantic tag and using a functional specification document (step S202); and generating a structured text description of the block diagram using the large language model which is trained (step S203). In one embodiment, the large language model can create a system diagram by combining each structured text description of the block diagrams based on the system specifications requested by the user. In one embodiment, the large language model can automatically generate a system document based on the system diagram.

In the embodiment of the step S201, a semantic tag integration step is also included, and the semantic tag integration step comprises: analyzing the block diagram to determine a semantic tag appropriate for the scalable vector graphics; and embedding the semantic tags into the scalable vector graphics or maintaining a separate tagging structure. In other words, in some embodiments, the semantic tags may be directly embedded into the scalable vector graphics or stored in a linking data file. The semantic tags provide additional information about the meaning and function of each element in the scalable vector graphics. For instance:
<rect class="cpu"> Identifies a rectangle representing the CPU block.
<circle class="camera"> Identifies a circle representing the camera block.
<line class="connection"> Identifies a line representing the connection between blocks.

In the step S201, a semantic tag identification step is also included. In one embodiment, the semantic tags are identified and defined for different elements, such as components, connections, interfaces, and functions, by analyzing the block diagram, and the appropriate semantic tags are assigned. By examining the structure and content of the block diagram, the key attributes and characteristics that need to be tagged can be determined for semantic understanding.

In the step S201, a step of integrating the semantic tags with the scalable vector graphics is also included. In one embodiment, the semantic tags are embedded into the block diagram represented by the scalable vector graphics to provide additional context and information to the large language model. Engineers can enhance elements in the scalable vector graphics by adding attributes or annotations to specify the assigned semantic tags, making the visual representation more informative and meaningful. Alternatively, in some embodiments, engineers can maintain a separate tagging structure, such as a JSON file, that links the elements in the scalable vector graphics with corresponding the semantic tags for input processing by the large language model.

In the step S201, a step for customizing the tagging scheme is also included. In one embodiment, a custom tagging scheme is developed that combines established semantic tagging principles with specific domain elements for specific system architecture and documentation requirements. By creating a hybrid approach to semantic tagging, engineers can use existing vocabularies and structures while integrating unique elements and relationships relevant to the specific domain. Such custom tagging scheme enhances the understanding of the large language model for the block diagrams and facilitates more accurate analysis and documentation.

In the step S201, a step for verifying and testing the tags is also included. In one embodiment, the integration of the semantic tags with the elements of the scalable vector graphics is verified by testing whether a large language model can effectively interpret and process the tagged scalable vector graphics. Engineers can perform verification tests to ensure that the semantic tags are correctly embedded into the scalable vector graphics and that the large language model can accurately interpret the tagged elements. Testing the integration of the tags helps identify any inconsistencies or errors that could impact the performance of the large language model in understanding the system architecture.

Scalable Vector Graphics (SVG) is a vector graphic format, that uses mathematical shapes and paths to define images. Therefore, the scalable vector graphics is resolution independent, thereby allowing the scalable vector graphics to be scaled without loss of quality. When a bitmap of a block diagram is transformed into the scalable vector graphics, transformation software (such as ImageTracer) attempts to identify and extract various shapes and elements in the image. The identification can be done using techniques such as edge detection, color segmentation, and pattern recognition. However, it is realized that the transformation software cannot directly transform a bitmap into text strings. The primary function of the transformation software is to transform bitmap images into vector graphic formats, such as scalable vector graphics, rather than performing Optical Character Recognition (OCR). To transform a bitmap image that contains text into text strings, OCR software or tools (such as Tesseract) are used.

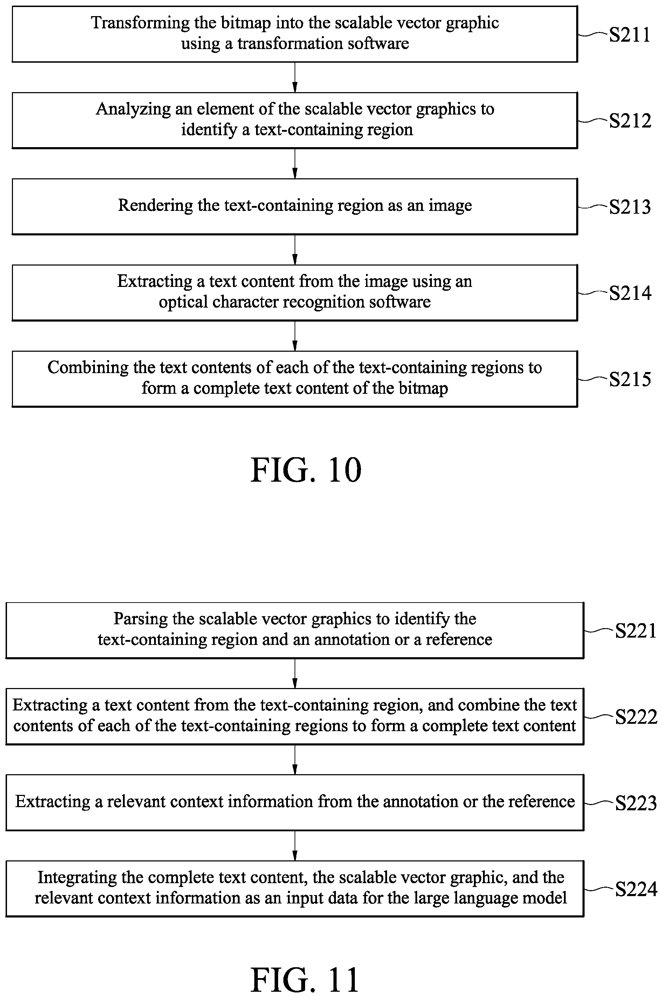

FIG. 10 is a flowchart illustrating text extraction of the method for applying a large language model system according to an embodiment of the instant disclosure. Please refer to FIG. 10. In the embodiment shown in FIG. 10, the step S201 further comprises a step for extracting text, and the step for extracting text comprises: transforming the bitmap into the scalable vector graphics using a transformation software (step S211); analyzing an element of the scalable vector graphics to identify a text-containing region (step S212); rendering the text-containing region as an image (step S213); extracting a text content from the image using optical character recognition software (step S214); and combining the text contents of each of the text-containing regions to form a complete text content of the bitmap (step S215).

In the embodiment of the step S211, transformation software is used to trace the bitmap image to create a scalable vector graphics file. The scalable vector graphics file will contain vector representations of shapes and elements in the original image, including text boxes (as shapes).

In the embodiment of the step S212, the scalable vector graphics file is analyzed to identify elements that may represent text blocks. This may involve examining shapes, sizes, positions, and any text-like attributes of the scalable vector graphics files.

In the embodiment of the step S213, each of the text-containing regions is re-rendered as a bitmap (e.g., PNG). The step S213 substantially creates a "screenshot" of the text blocks in the scalable vector graphics.

In the embodiment of the step S214, each rendered text bitmap is sent to OCR software or tools to extract text content from the bitmaps.

In the embodiment of the step S215, text content from each of the text-containing regions is combined into meaningful text content using artificial intelligence or large language model technology.

In the step S212, a step for analyzing the elements of the scalable vector graphics to identify text-containing regions is also included. In one embodiment, the step for analyzing the elements of the scalable vector graphics to identify text-containing regions comprises: searching for elements that have rectangular or square shapes in the scalable vector graphics; searching for elements that are positioned on the same horizontal plane and have similar vertical spacing in the scalable vector graphics; and searching for elements that have text attribute tags in the scalable vector graphics.

In the step S212, a step for analysis based on shapes and sizes is also included, and the step for analysis based on shapes and sizes comprises:
1. Searching for elements with rectangular or square shapes: Text is typically contained within rectangles or squares in the scalable vector graphics.
2. Identifying elements with consistent or similar dimensions: Text blocks typically have consistent heights and widths within the same document. Search for groups of elements with similar dimensions.
3. Filtering out elements with small sizes: Very small elements are unlikely to represent text, so a reasonable size threshold can be defined for filtering.

In the step S212, a step for analysis based on position is also included, and the step for analysis based on position comprises:
1. Searching for elements positioned in horizontal lines: Text is typically arranged horizontally, so search for groups of elements that are positioned on the same horizontal plane and have similar vertical spacing.
2. Identifying elements with consistent spacing: Text typically has consistent horizontal spacing between them, so search for elements with similar horizontal spacing.

In the step S212, a step for analysis based on attributes is also included, comprising:
1. Checking for the presence of a "text" element: The scalable vector graphics have a specific "text" element type used to represent text. Search for elements with the <tag>text</tag> tag.
2. Searching for text-related attributes: Elements representing text may have the following attributes:
   (1) Text-anchor: This attribute defines the alignment of the text within the bounding box thereof.
   (2) Font-size: This attribute specifies the font size used for the text.
   (3) Font-family: This attribute specifies the font family used for the text.
   (4) Consider the "fill" attribute: Although not a definitive standard, text elements typically have the "fill" attribute used to define the color of the text.

In the embodiment of the step S212, by combining the above steps, the accuracy of identifying text-containing regions in the scalable vector graphics file can be improved. For example, an element with a rectangular shape, positioned horizontally with consistent spacing, and labeled with a "text" tag may be highly likely to represent text.

In the embodiment of the step S201, a block diagram typically comprises multiple components, some of the components may represent interfaces that perform communication and interaction between other components within the system. An interface can be constructed by multiple components. Hardware interfaces allow physical devices to communicate with each other or with a computer. Examples include USB ports, HDMI connectors, and audio jacks. Each component in a hardware interface serves a specific role in transmitting or receiving data or power. The major elements of the semantic tags comprise component identification information, interface type information, compatibility information, spatial relationship information (optional), and additional contextual information (optional). The information ensure that the block diagrams can be interconnected to each other at the interface level.

In the embodiment of the step S201, the component identification information of the semantic tags comprises:
1. Unique identifier: The unique identifier to each component is assigned (e.g., "power_supply_1", "amplifier_4").
2. Component type: The primary function of the component is Specified (e.g., "power supply", "filter", "amplifier", "controller").
3. Manufacturer and model (optional): For specific hardware implementations, the manufacturer and the model information are included.

In the embodiment of the step S201, the interface type information of the semantic tags comprises:
1. Interface type: The type of interface is specified (e.g., "digital", "analog", "power", "communication").
2. Signal direction: The direction of signal flow is indicated (e.g., "input", "output", "bidirectional").
3. Signal type: The type of signal being transmitted is specified (e.g., "voltage", "current", "data", "control").
4. Connector type: The physical connector used is identified (e.g., "USB", "Ethernet", "HDMI", "screw terminal").
5. Polarity (if applicable): The positive or negative terminal for power or signal connection is specified.

In the embodiment of the step S201, the compatibility information of the semantic tags comprises:
1. Compatible interface types: The compatible interface types for each component is listed (e.g., "power_supply_1" can connect to "DC_input" or "AC_input").
2. Signal matching requirements: Any matching requirements, such as voltage levels, impedance, or data protocols is specified.
3. Constraints: Any limitations on the connection, such as maximum power consumption or signal timing is indicated.

In the embodiment of the step S201, the spatial relationship information (optional) of the semantic tag comprises:
1. Relative position: The spatial arrangement of components is described (e.g., "power_supply_1" is above "amplifier_4").
2. Connection path: The physical path of connections between components is indicated.

In the embodiment of the step S201, the additional contextual information (optional) of the semantic tag comprises:
1. Functional role: The role of the component in the system is described (e.g., "power_supply_1" provides power to the entire system).
2. Interconnection rules: Any general interconnection rules or guidelines that apply to the domain is specified.

In the embodiment of the step S201, an example of expressing the semantic tag of the component in Extensible Markup Language (XML) is shown below:

```
 <block id="power_supply_1" type="power_supply">
 <interface type="DC_input" direction="input" signal_type="voltage" connector="screw_terminal"
 polarity="positive"/>
 <interface type="DC_output" direction="output" signal_type="voltage"
 connector=" screw_terminal" polarity="positive"/>
 <compatibility compatible_interface_types="DC_input, DC_output" voltage_level="12V"/>
 </block>
```

FIG. 11 is a flowchart illustrating the data extraction process executed using the AI agent 402 according to a method for applying a large language model system according to an embodiment of the instant disclosure. Please refer to FIG. 11. In the embodiment shown in FIG. 11, when the extracted text content contains annotations or references, the information from the annotations or references can be integrated using the AI agent 402 during the natural language understanding task for the extracted text content. The step S201 comprises a step of data extraction performed by the AI agent 402, and the step of data extraction comprises: parsing the scalable vector graphics to identify text-containing region and an annotation or a reference (step S221); extracting a text content from the text-containing region and combining the text contents from each of the text-containing regions to form a complete text content; (step S222); extracting a relevant context information from the annotation or the reference (step S223); and integrating the complete text, the scalable vector graphics, and relevant context information as an input data for the large language model (step S224). The annotation or reference provides textual explanations, summaries, or additional details about specific elements in the scalable vector graphics. The annotation is the additional textual information for a block in a block diagram, which may contain a description of the function or purpose thereof. The reference is a citation to an external document, which may contain a link address, and the external document may contain detailed descriptions of a component in the scalable vector graphics.

In the step S202, a step for training the large language model using question and answer pairs is also included. In one embodiment, although the primary learning approach for the large language model is using the scalable vector graphics with the semantic tags and their corresponding functional specification files as training data, this approach may not necessarily grant the large language model true reasoning capabilities in the same way as a human. To improve the reasoning accuracy of the large language model, the training data of "question and answer pairs" can be used. In one embodiment, factual questions are used to test the understanding capabilities of specific facts and relationships within the functional specifications and the corresponding block diagrams. With the single-choice answer, the large language model is allowed to choose the correct answer from a set of predefined options. This format is helpful for factual questions because the answer is usually clear. In another embodiment, with open-ended questions, the large language model not only retrieves factual information but also engages in more complex reasoning. Under this configuration, the large language model may need to generate a text answer that responds to a query in a comprehensive and informative way. This format is suitable for open-ended questions that require the large language model to demonstrate the reasoning capabilities and understanding of context. The large language model can learn during the training process:
1. Visual elements in the scalable vector graphics: The visual elements in the scalable vector graphics are identified by the semantic tags.
2. Function description in the document: The function description in the document is described by the purpose and behavior of the blocks and connections between the blocks.

In the step S202, a reasoning step is also included. In one embodiment, the large language model which is trained is used to perform reasoning on an unseen scalable vector graphics with the semantic tags. The large language model receives a new, unseen scalable vector graphics with the semantic tags as input, and generates a text description or a new scalable vector graphics depicting the block diagram with interconnections at the interface level, as specified in the functional specification document.

In the step S203, a step of automatically assembling the block diagram from the knowledge base is also included. In one embodiment, the large language model which is trained is used to automatically assemble the block diagrams based on the input data and the semantic tags. The large language model is trained using the scalable vector graphics with tags and functional specification documents to understand the relationships between elements in the scalable vector graphics, enabling the large language model to generate an accurate representation of the system architecture. The process of creating complex block diagrams can be simplified by leveraging the capabilities of the large language model in interpreting the semantic tags and functional descriptions.

In the step S203, a step of generating a block diagram based on the input data and the semantic tags is also included. In one embodiment, input data for the large language model is provided, such as system requirements or component specifications, along with corresponding the semantic tags that define the elements and connections within the diagrams. The large language model uses this information to construct block diagrams that reflect the system architecture, including the identified components and interconnections between the identified components. By automating the diagram assembly process, engineers can save time and effort in creating a visual representation of complex systems. In one or some embodiments of the instant disclosure, the block diagram generated by a large language model refers to that a structured text description is generated to represent the block diagram using a markup language. The structured text description in the markup language can be transformed into a visual or graphic representation using specific graphic transformation software.

In the step S203, a step of verifying the interface level connections is also included. In one embodiment, interface level connections between blocks are verified by comparing the generated block diagram with the functional specification document. The large language model can analyze the connections depicted in block diagrams and cross-reference the connections depicted in block diagrams with the specified interfaces and interactions outlined in the functional specifications. This verification process ensures that the block diagram accurately represents the intended system architecture and meets documented requirements.

In the step S203, a step of aligning with the functional specification document is also included. In one embodiment, the step of aligning with the functional specification document ensures that the generated block diagram aligns with the functional specification document by verifying that the connections and interfaces depicted in the block diagram correspond to the system requirements and design specifications. By verifying connections at the interface level, engineers can confirm that the block diagram accurately reflects the intended functionality and interactions within the system, facilitating effective communication and collaboration among team members.

A step for generating a system architecture diagram in the method for applying the large language model system according to one or some embodiments of the instant disclosure is also included. In one embodiment, a detailed system architecture diagram is generated based on multiple block diagrams generated by the large language model. The generated system diagram is intended to provide an overall view of the system architecture, including all components, connections, and interfaces identified through the automated diagram assembly process. By visualizing the system architecture in a system diagram, engineers can gain insights into the overall structure and internal relationships within the system.

A step of automatically generating system documents in the method for applying the large language model system according to one or some embodiments of the instant disclosure is also included, and the step of automatically generating system documents in the method for applying the large language model system comprises generating comprehensive system documents automatically based on the generated block diagrams, system diagrams, and related information using the large language model. The large language model can analyze system architecture diagrams, component specifications, and connections to create detailed documentation that captures the design, functionality, and interactions of the system. By automating the documentation generation process, engineers can ensure consistency, accuracy, and efficiency in documenting complex systems.

## Claims

1. A large language model system, comprising:
a personal AI computer (100) comprising a personal AI agent (102); and
an enterprise AI server (200) comprising an enterprise AI agent (202);
wherein the personal AI agent (102) executes a first action plan to obtain a first integrated answer (112) and a first integrated score (114) based on a first query (110), and in response to that the first integrated score (114) is less than a threshold, the personal AI agent (102) submits a second query (120) to the enterprise AI server (200); and
wherein the enterprise AI agent (202) executes a second action plan to obtain a second integrated answer (122) and a second integrated score (124) based on the second query (120), and in response to that the second integrated score (124) is equal to or greater than the threshold, the enterprise AI server (200) returns the second integrated answer (122) to the personal AI agent (102).

2. The large language model system according to claim 1, wherein the personal AI computer (100) comprises a personal vector database (104) and a personal large language model (106); and the enterprise AI server (200) comprises an enterprise vector database (204) and an enterprise large language model (206);
wherein the first action plan comprises:
searching the personal vector database (104) to obtain a first factual data;
reasoning the first factual data to obtain a first reasoning result using a reasoning engine (4022) of the personal AI agent (102);
querying the personal large language model (106) to retrieve a first enriched information related to the first factual data; and
integrating the first factual data, the first reasoning result, and the first enriched information to obtain the first integrated answer (112) using an integrator (4021) of the personal AI agent (102); and
wherein the second action plan comprises:
searching the enterprise vector database (204) to obtain a second factual data;
reasoning the second factual data to obtain a second reasoning result using the reasoning engine (4022) of the enterprise AI agent (202);
querying the enterprise large language model (206) to retrieve a second enriched information related to the second factual data; and
integrating the second factual data, the second reasoning result, and the second enriched information to obtain the second integrated answer (122) using the integrator (4021) of the enterprise AI agent (202).

3. The large language model system according to any of claims 1 and 2, wherein the personal AI agent (102) obtains the first integrated score (114) based on the first integrated answer (112), and the enterprise AI agent (202) obtains the second integrated score (124) based on the second integrated answer (122).

4. The large language model system according to any of claims 1-3, further comprising:
a public AI server (300) comprising a public AI agent (302);
wherein the public AI agent (302) receives a third query (130) from the enterprise AI agent (202) and the public AI agent (302) executes a third action plan to obtain a third integrated answer (132) and a third integrated score (134) based on the third query (130), and in response to that the third integrated score (134) is less than the threshold, the public AI agent (302) returns a null value (138) to the enterprise AI agent (202), or in response to that the third integrated score (134) is equal to or greater than the threshold, the public AI agent (302) returns the third integrated answer (132) to the enterprise AI agent (202).

5. A method for operating a large language model system, comprising:
executing a first action plan to obtain a first integrated answer (112) and a first integrated score (114) based on a first query (110) using a personal AI agent (102), and in response to that the first integrated score (114) is less than a threshold, the personal AI agent (102) submits a second query (120) to an enterprise AI agent (202); and
executing a second action plan to obtain a second integrated answer (122) and a second integrated score (124) based on the second query (120) using the enterprise AI agent (202), and in response to that the second integrated score (124) is equal to or greater than the threshold, the enterprise AI agent (202) returns the second integrated answer (122) to the personal AI agent (102).

6. The method for operating a large language model system according to claim 5, wherein the personal AI agent (102) is connected to a personal vector database (104) and a personal large language model (106); and the enterprise AI agent (202) is connected to an enterprise vector database (204) and an enterprise large language model (206);
wherein the execution of the first action plan comprises:
searching the personal vector database (104) to obtain a first factual data;
reasoning the first factual data to obtain a first reasoning result using a reasoning engine (4022) of the personal AI agent (102);
querying the personal large language model (106) to retrieve a first enriched information related to the first factual data; and
integrating the first factual data, the first reasoning result, and the first enriched information to obtain the first integrated answer (112) using an integrator (4021) of the personal AI agent (102); and
wherein the execution of the second action plan comprises:
searching the enterprise vector database (204) to obtain a second factual data;
reasoning the second factual data to obtain a second reasoning result using the reasoning engine (4022) of the enterprise AI agent (202);
querying the enterprise large language model (206) to retrieve second enriched information related to the second factual data; and
integrating the second factual data, the second reasoning result, and the second enriched information to obtain the second integrated answer (122) using the integrator (4021) of the enterprise AI agent (202).

7. The method for operating a large language model system according to any of claims 5 and 6, wherein the personal AI agent (102) obtains the first integrated score (114) based on the first integrated answer (112), and the enterprise AI agent (202) obtains the second integrated score (124) based on the second integrated answer (122).

8. The method for operating a large language model system according to any of claims 5-7, further comprising:
receiving a third query (130) from the enterprise AI agent (202) using a public AI agent (302), executing a third action plan to obtain a third integrated answer (132) and a third integrated score (134) based on the third query (130), and in response to that the third integrated score (134) is less than the threshold, returning a null value (138) to the enterprise AI agent (202), or in response to that the third integrated score (134) is equal to or greater than the threshold, returning the third integrated answer (132) to the enterprise AI agent (202).

9. A method for applying a large language model system, comprising:
(a) transforming a bitmap of a block diagram into a scalable vector graphics and integrating a semantic tag into the scalable vector graphics;
(b) training the large language model using the scalable vector graphics integrated with the semantic tag and using a functional specification document; and
(c) generating a structured text description of the block diagram using the large language model which is trained.

10. The method for applying a large language model system according to claim 9, wherein the step (a) further comprises a semantic tag integration step, comprising:
analyzing the block diagram to determine a semantic tag appropriate for the scalable vector graphics; and
embedding the semantic tag into the scalable vector graphics or maintaining a separate tagging structure.

11. The method for applying a large language model system according to any of claims 9 and 10, wherein the step (a) further comprises a text extraction step, comprising:
transforming the bitmap into the scalable vector graphics using a transformation software;
analyzing an element of the scalable vector graphics to identify a text-containing region;
rendering the text-containing region as an image;
extracting a text content from the image using an optical character recognition software; and
combining the text contents of each of the text-containing regions to form a complete text content of the bitmap.

12. The method for applying a large language model system according to claim 11, wherein the step of analyzing an element of the scalable vector graphics to identify a text-containing region comprises:
searching for elements that have rectangular shapes in the scalable vector graphics;
searching for elements that are positioned on the same horizontal plane and have similar vertical spacing in the scalable vector graphics; and
searching for elements that have text attribute tags in the scalable vector graphics.

13. The method for applying a large language model system according to any of claims 9-12, wherein the step (a) further comprises a data extraction step performed by an AI agent, and the data extraction step comprises:
parsing the scalable vector graphics to identify the text-containing region and an annotation or a reference;
extracting a text content from the text-containing region, and combining the text contents from each of the text-containing regions to form a complete text content;
extracting a relevant context information from the annotation or the reference; and
integrating the complete text content, the scalable vector graphics, and the relevant context information as an input data for the large language model.

14. The method for applying a large language model system according to any of claims 9-13, wherein the step (c) comprises:
verifying an interconnection of the structured text description of the block diagram at an interface level based on the functional specification document.

15. The method for applying a large language model system according to any of claims 9-14, further comprising:
combining each of the structured text descriptions of the block diagram to generate a system diagram; and
generating a system document based on the system diagram.
